# EUROPEAN PATENT APPLICATION

(11) **EP 1 207 683 A2**
(43) Date of publication of application: **22.05.2002**
(21) Application number: 01204242.0
(22) Date of filing: 05.11.2001
(51) Int. Cl.: H04N 1/387

(54) **A method and system for page composition of digital medical images**

(30) Priority: 20.11.2000 US 718025
(71) Applicant: EASTMAN KODAK COMPANY, Rochester, New York 14650 (US)
(72) Inventor: Kohm, Kevin S., c/o Eastman Kodak Company, Rochester, New York 14650-2201 (US); Cornelius, Craig W., Eastman Kodak Company, Rochester, New York 14650-2201 (US); Levy, Teresa M., Eastman Kodak Company, Rochester, New York 14650-2201 (US); Wang, Xiaohui, Eastman Kodak Company, Rochester, New York 14650-2201 (US)
(74) Representative: Parent, Yves

(57) **Abstract**

A method for automatically composing digital medical images comprising; providing a plurality of digital medical images; providing image exam information for each said digital medical image; performing exposure field detection processing on each said digital medical image to determine size and location of each exposure field in each said digital medical image; performing exposure field extraction processing for each said digital medical image using said size and said location of each said exposure field to produce an exposure field sub-image for each said exposure field; using said image exam information to determine the placement location of each said exposure field sub-image by applying pre-defined image placement rules; and creating a composed digital medical image by combining each said exposure field sub-image using said placement location of each said exposure field sub-image.

## Description

This invention relates in general to digital medical imaging, and in particular to the page layout of multiple digital medical images for display on a softcopy viewing station or for printing to film.

Multiple medical images are frequently viewed at the same time either on a single piece of film or on a single diagnostic monitor. There are three primary reasons for this viewing protocol. First, in screen/film radiography and computed radiography (CR) a single radiographic plate may be exposed multiple times with different projections of the anatomy. For example, an anterior-posterior (AP) view of the hand and a lateral view of the hand may be positioned on the same plate. This conserves film and logically groups the individual components of the exam. Second, as with computed tomography and magnetic resonance imaging, many smaller images or slices are acquired during one exam and viewed in a multi-up configuration. Third, multiple images may wish to be composed on a single page to again logically group the exams. With the emerging technology of direct digital radiograph (DR), the ability to acquire a multiple exposure exam as in screen/film or CR will be lost. This is because each DR exposure is stored as an entire image, even though only a portion of the imaging field may actually be exposed. So for the case of the AP and lateral view of the hand, there will be two separate images instead of one multiple exposure image today. This will remove the logical grouping of exams and unnecessarily increase film utilization. Through digital image processing, these separate exams may be taken together and composed onto a single image. Further, the enhancement of the individual images can also be modified during the page composition process. There is a need to automate the composition of medical images on a page for softcopy display or film printing and allow modification of the processing parameters on the individual images.

The following four display approaches are relevant here: (1) hanging protocols, (2) page layout systems, (3) medical imaging print standards, and (4) automatic detection of exposure fields.
(1) Current diagnostic viewing workstations typically consist of multiple image display monitors and present one image per monitor. The image size is frequently re-scaled to fit the allocated viewing area or the image is displayed at 1:1 magnification with the image centered. This functionality removes the ability to logically group separately acquired images together on one monitor. More advanced workstations use hanging protocols with information from each image such as modality, body part and procedure to compose multiple images per monitor. An example of a workstation that incorporates hanging protocols is AutoRAD NT 4.0 (Cexam-Icon, a Kodak Company, Fremont, CA). Again, the images are displayed either scaled to fit or at 1:1 magnification with the image centered in each image window. The problem with this approach is that the images are scaled to fit, the image size may potentially be very small if only a small portion of the plate is exposed. If the 1:1 centering approach is used, the region of the exposure on the plate may not be centered and therefore, may cause the actual exposure field to be outside the display area allocated on the monitor and subsequently only display a portion of the exposure field.
(2) In U.S. Patent 5,734,915, inventor Roewer, issued March 31, 1998, a method is disclosed for composing digital medical images. Multiple images are automatically presented on a single display, using a window for each image, however, this invention does not include the additional steps of performing exposure field detection and exposure field extraction from the input images. Therefore, manual adjustment may be necessary for highly collimated exposure fields. Likewise, the commercial print composition software MasterPage (Traitement Synthèse Image, Champs Sur Marne, France) automatically positions multiple images on a composed page. Again, the automatic detection of exposure fields is not performed, although manual positioning and cropping is enabled.
(3) Digital Imaging and Communications in Medicine (DICOM) is the de facto standard for digital medical image transfer. The print portion of the standard specifies methods for placing multiple images on a page by a process commonly known as multi-format print. In using this protocol, the print user specifies the number of images and the format to be printed. For example, four images may be printed on one page by specifying STANDARD\2,2, which will create four equal size image boxes in a two column by two row format. Then, each of the four images in the image boxes are specified. The images placed in the image boxes are either specified as scaled to fit, displayed at 1:1 magnification or at a requested physical image size. So, the same issues exist in this case as with image display on workstations. If the images are scaled to fit, the image size may potentially be very small, if only a small portion of the plate is exposed; if the 1:1 or requested image size approach is used, the region of the exposure on the plate may not be centered and therefore, may cause the actual exposure field to be outside the image box area allocated on the film. The area outside the image box is either omitted from printing, or in some cases, the print job may fail. The image store portion of DICOM allows image transfer to an image viewing workstation or digital archive. The most recently adopted portion of the standard dealing with digital x-ray, the DX IOD, requires that only one exposure field be present per image. This specifically removes the ability to group multiple exposure fields in one image. It is then assumed that the display workstation may group the images, as desired, for display. It is specifically noted that operator intervention to assure the appropriate exposure field separation may be used. This invention simplifies this process by automatically detecting and separating the exposure fields.
(4) Many inventions address the problem of segmenting exposure fields from a digital radiograph. These include: U.S. Patent 5,651,042, inventor Dewaele, issued July 22, 1997; U.S. Patent 5,764,791, inventor Hara, issued June 9, 1998; U.S. Patent 5,732,149, inventor Kido, et al., issued March 24, 1998; and U.S. Patent application 09/015,656 inventor Wang et al., filed January 29, 1998. All of these inventions describe methods for detecting and segmenting exposure fields in a digital radiograph. None of these inventions, however, address the problem of using the segmentation results from multiple images to compose a new medical image.

According to the present invention, the drawbacks described above are eliminated.

According to a feature of the present invention, there is provided a method for automatically composing digital medical images comprising:
providing a plurality of digital medical images;
providing image exam information for each said digital medical image;
   performing exposure field detection processing on each said digital medical image to determine size and location of each exposure field in each said digital medical image;
   performing exposure field extraction processing for each said digital medical image using said size and said location of each said exposure field to produce an exposure field sub-image for each said exposure field;
   using said image exam information to determine the placement location of each said exposure field sub-image by applying pre-defined image placement rules; and
creating a composed digital medical image by combining each said exposure field sub-image using said placement location of each said exposure field sub-image.

The invention has the following advantages.
1. The composition of medical images on a page for softcopy display or film printing is automated and modification of the processing parameters on the individual images is allowed.
2. Exposure fields are automatically detected and separated.
3. Multiple images are automatically presented for display while conserving hardcopy/softcopy viewing space.
4. Images are presented for display using a logical grouping of exams.

Fig. 1 is a block diagram of the automatic page composition processing.

Fig. 2 is a block diagram of the hanging protocol algorithm.

Fig. 3 is an example of two input images and the subsequent composed medical image.

Fig. 4 is a block diagram of a digital medical image acquisition system.

Fig. 5 is a block diagram of a digital image processor for carrying out the method of the present invention.

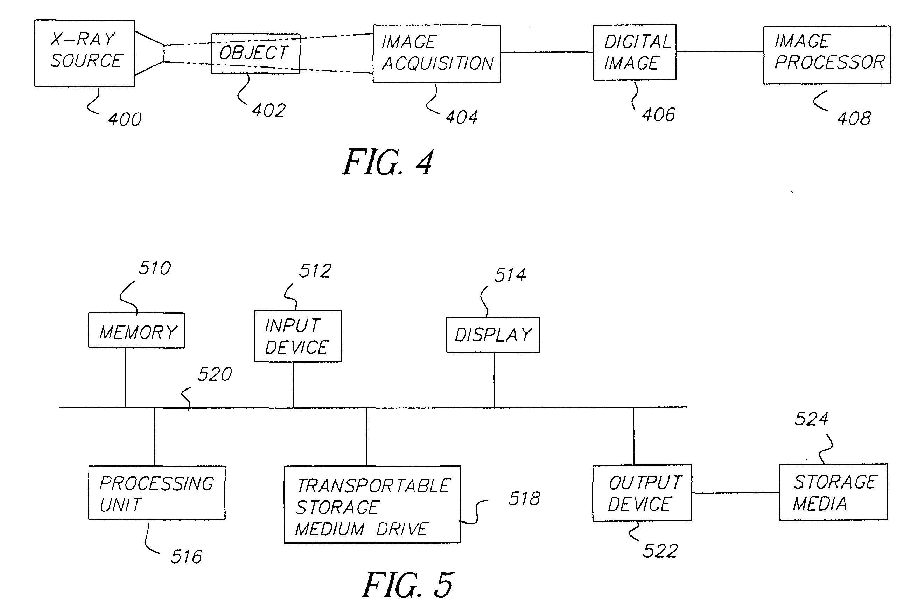

The method of the present invention is described below as a series of operations performed on a digital image, such as a digital radiographic image of a body part. The digital image can be formed by the digital image acquisition system of Fig. 4. As shown, x-ray source 400 projects x-rays through object 402 (such as a body part extremity, e.g., hand or foot) to image acquisition system 404. The image acquisition system can be, for example, (1) a standard x-ray screen/film combination which produces an x-ray film image which is processed chemically or thermally and the processed film digitized by a scanner/digitizer 406; (2) a computed radiography system where a latent x-ray image is formed in a storage phosphor 404 and a corresponding digital image is produced by reading out the storage phosphor by a CR reader 406; (3) a diagnostic scanner (such as MRI, CT, US, PET) produces an electronic x-ray image which is digitized; and (4) a direct digital acquisition system typically consisting of a phosphor based scintillating screen coupled to an imager (CCD, MOS) through a lens or fiber optic system.

The digital image is processed in image processor 408, according to the method of the present invention. Image processor 408 can take the form of a digital computer, such as illustrated in Fig. 5. In such case, one or more of the steps of said method can be carried out using software routines. Image processor 408 can also include hardware or firmware for carrying out one or more of said method steps. Thus, the steps of the method of the invention can be carried out using software, firmware, and hardware, either alone or in any preferable combination.

As shown in Fig. 5, a digital computer 500 includes a memory 510 for storing digital images, application programs, operating system, etc. Memory 510 can include mass memory (such as a hard magnetic disc or CD ROM), and fast memory (such as RAM). Computer 500 also includes input device 512 (such as a keyboard, mouse, touch screen), display 514 (CRT monitor, LCD), central processing unit 516 (microprocessor), output device 518 (thermal printer, dot matrix printer, laser printer, ink jet printer). Components 510, 512, 514, 516, 518 are connected together by control/data bus 520. Computer 500 can include a transportable storage medium drive 522 for reading from and/or writing to transportable storage media 524, such as a floppy magnetic disk or writeable optical compact disk (CD).

As used in this application, computer readable storage medium can include, specifically, memory 510 and transportable storage medium 524. More generally, computer storage medium may comprise, for example, magnetic storage media, such as magnetic disk (hard drive, floppy disk) or magnetic tape; optical storage media, such as optical disk, optical tape, or machine readable bar code; solid state electronic storage devices, such as random access memory (RAM), read only memory (ROM); or any other physical device or medium which can be employed to store a computer program.

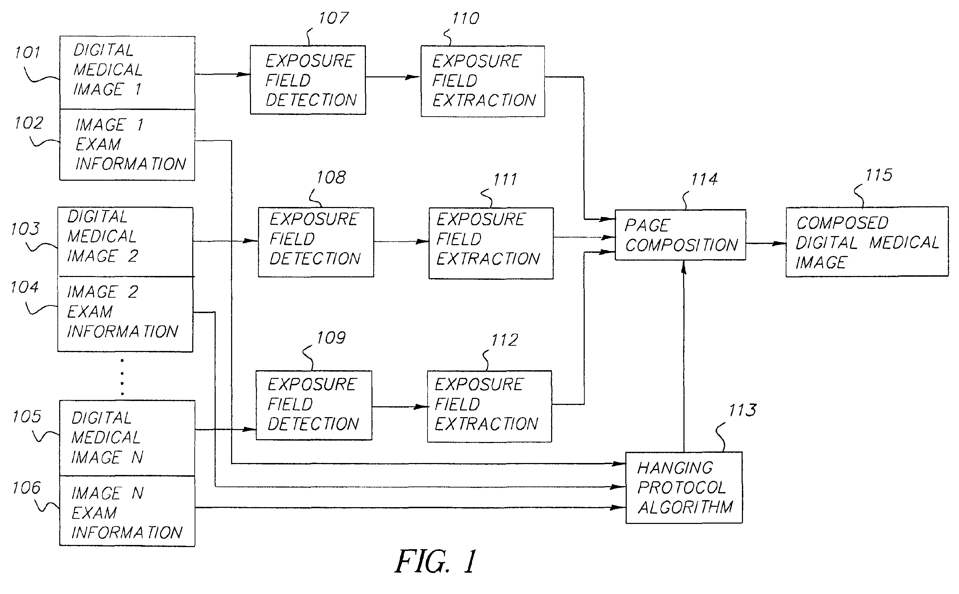

Fig. 1 describes the processing flow of the present invention. For this description, consider that N digital medical images will be composed on a page. The N images are represented in Figure 1 by: Digital Medical Image 1-101, Digital Medical Image 2-103 and Digital Medical Image N-105. In addition, exam information is provided for each digital medical image. The exam information includes items such as the acquisition modality, the body part, procedure, etc. This information is represented in Figure 1 by: Image 1 Exam Information 102, Image 2 Exam Information 104 and Image N Exam Information 106.

The first processing to be performed is to determine the location of the exposure field in each image. This processing determines the foreground area of the image, which is the area of no direct exposure due to x-ray collimation during the acquisition process. The preferred embodiment of the exposure field detection processing is disclosed by Wang, et al., U.S. Patent Application 09/015,656, filed on January 29, 1998. Coupled with the detection is exposure field extraction which creates a new sub-image from the original digital medical image which has the foreground removed and contains only the image data contained in the actual exposure field. This is represented for each digital medical image as follows. Exposure Field Detection 107 is performed on Digital Medical Image 1-101. Then Exposure Field Extraction 110 is performed using the results from Exposure Field Detection 107. Likewise, Exposure Field Detection 108 is performed on Digital Medical Image 2-103. Then Exposure Field Extraction 111 is performed using the results from Exposure Field Detection 108. Likewise, Exposure Field Detection 109 is performed on Digital Medical Image N 105. Then Exposure Field Extraction 112 is performed using the results from Exposure Field Detection 109. Likewise exposure field detection is performed on digital medical images 3 ---N-1 and exposure field extraction is performed respectively on digital medical images 3---N-1.

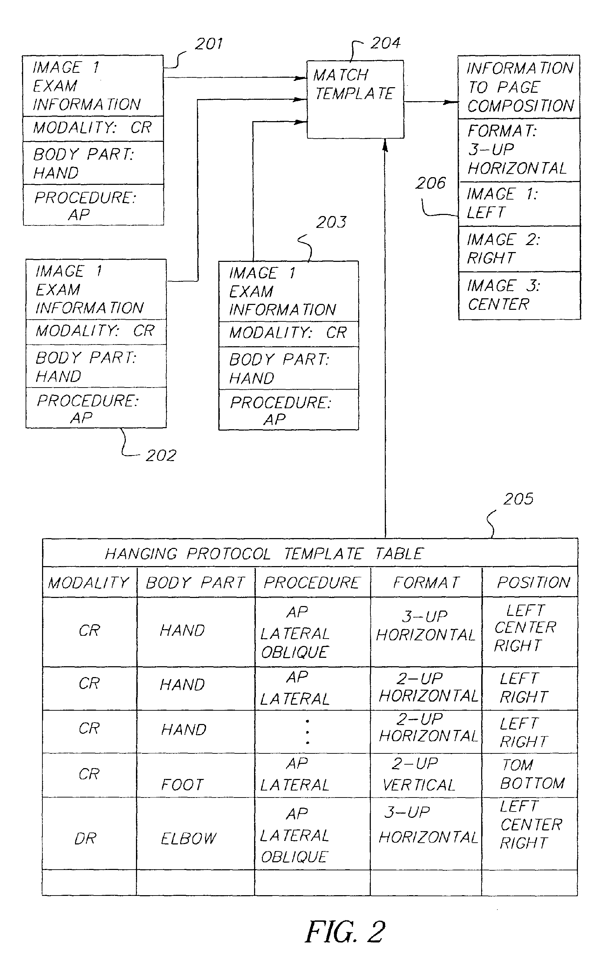

Next, the exam information for each digital medical image is used to automatically determine the page layout. Image 1 Exam Information 102, Image 2 Exam Information 104, exam information for images 3--N- 1 and Image N Exam Information 106 are input to the Hanging Protocol Algorithm 113. Refer to Figure 2 for a description of the Hanging Protocol Algorithm 113. In this case, there are three images to be composed with exam information including modality, body part and procedure. The example will use the following values. Image 1 Exam Information 201 contains the Modality field equal to CR, the Body Part field equal to Hand and the Procedure field equal to AP. Image 2 Exam Information 202 contains the Modality field equal to CR, the Body Part field equal to Hand and the Procedure field equal to Oblique. Image 3 Exam Information 203 contains the Modality field equal to CR, the Body Part field equal to Hand and the Procedure field equal to Lateral. This information is fed into the Match Template 204 process. Match Template 204 uses the Hanging Protocol Template Table 205 to match the exam information provided to a defined template in the table. In this example, the first template in the table matches the exam information provided. Therefore, Match Template 204 provides the following Information to Page Composition 206: the Format field is equal to 3-up Horizontal, the Image 1 position is Left, the Image 2 position is Right and the Image 3 position is Center. This concept can be extended to include more robust hanging protocols by including wildcards "*" in the procedure fields. For example, the second line in the Hanging Protocol Template Table 205 is for a CR, Hand image with AP and Lateral views. If two images are presented with AP and Lateral views, this format will be applied. However, if two images are presented with views which are not included in the table, for example, Lateral and Oblique, the format on the following line, with wildcards "*", will be utilized as no direct match without wildcards is provided.

Referring back to Figure 1, the Hanging Protocol Algorithm 113, provides layout information to the Page Composition 114 processing module. Using this layout information from the Hanging Protocol Algorithm 113, the Page Composition 114 module takes the sub-images produced by the individual Exposure Field Extraction (110, 111, 112) processing steps and creates the Composed Digital Medical Image 115. The image 115 can be presented on an electronic display or printed out on hardcopy, such as film.

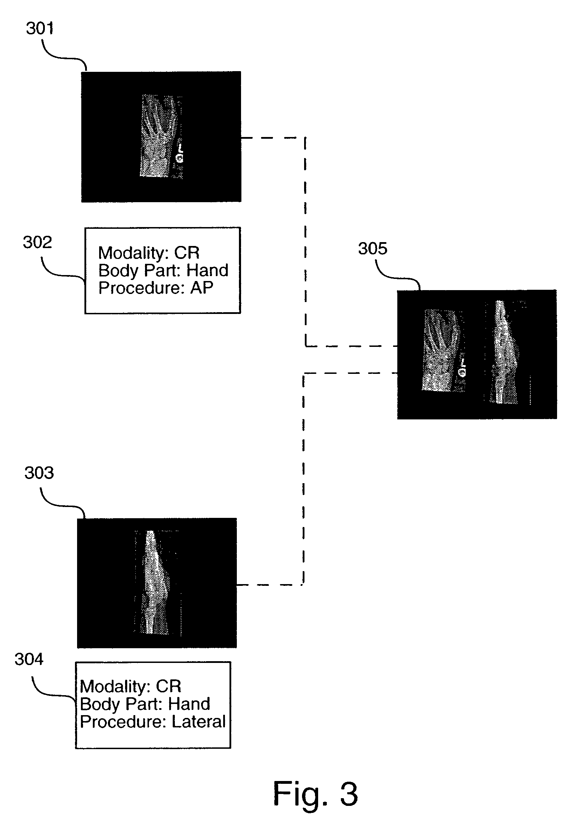

An example of this processing is provided in Figure 3. In this example, two digital medical images are to be composed. Example Digital Medical Image 1-301 and Example Digital Medical Image 2-303 are provided. Along with these images, Example Image 1 Exam Information 302 and Example Image 2 Exam Information 304 is provided. After performing the processing in the present invention, Example Composed Digital Medical Image 305 is produced.

The above description is the core component of the present invention. Additional specializations may be added to the processing disclosed above to provide greater functionality. These additions are described below.

In some exams, multiple exposure fields are produced in a single image. This is particularly common with bone exams using computed radiography or analog film which has been digitized. The exposure field detection algorithm of the preferred embodiment can segment multiple exposure fields and produce a sub-image for each exposure field. Exam information must now be provided for each exposure field. Multiple ways for providing this information exist including manual entry by the operator or use of wildcards, as described above for each exposure field.

After each exposure field has been identified and a sub-image created, image enhancement may be performed on each exposure field sub-image. This processing can include applying a blackened surround mask around the exposure field to reduce viewing flare. A method for performing this processing is disclosed in U.S. Patent application 09.015,656 inventor Wang et al., filed January 29, 1998. Tonal processing may also be performed such as look-up tables or window center and window width adjustment as is common in medical image processing. Adaptive contrast enhancement may also be applied, such as the algorithm disclosed in U.S. Patent 5,978, 518, inventor Oliyide et al., issued November 2, 1999. Also unsharp mask edge enhancement may be performed such as that described in U.S. Patent 5,270,530, inventor Godlewski et al., issued December 14, 1993. Default enhancement parameters for all of the above processing algorithms may be stored in the Hanging Protocol Template Table for each set of images in a template.

Magnification information may also be included in the Hanging Protocol Template Table. This can include methods such as 1:1 magnification, scale to fit or true size. If 1:1 magnification or true size is specified, it is possible for the exposure field sub-image to be larger than the page size allocated to that sub-image. In this case some portion of the image must be clipped or removed from the displayed area on the page. A warning message to the user indicating this condition, including a method for changing the layout is preferred for this case. After the initial page is composed, adjustments to the layout may be desired. The user may manually select an exposure field sub-image through a graphical user interface. Then, the user may move the position, magnification or image enhancement parameters of the selected exposure field from the initial values.

Some potential methods for selecting the digital medical images to be composed should be noted. The user may select multiple images manually through a graphical user interface. Also, in DICOM, multiple images may be grouped together as a study or series. Selection of a study or series can be used to specify the digital medical images to be composed on the page.

## Claims

1. A method for automatically composing digital medical images comprising:
providing a plurality of digital medical images;
providing image exam information for each said digital medical image;
performing exposure field detection processing on each said digital medical image to determine size and location of each exposure field in each said digital medical image;
performing exposure field extraction processing for each said digital medical image using said size and said location of each said exposure field to produce an exposure field sub-image for each said exposure field;
using said image exam information to determine the placement location of each said exposure field sub-image by applying pre-defined image placement rules; and
creating a composed digital medical image by combining each said exposure field sub-image using said placement location of each said exposure field sub-image.

2. The method of claim 1 where said exposure field detection processing is as follows:
providing a digital radiographic image having a plurality of radiation fields and collimation regions defined by collimation blades at least partially bounding said radiation fields;
detecting and classifying pixels of said digital radiographic image as collimation boundary transition pixels using smart edge detection based on a classifier and a prior knowledge of the collimation process;
line-level delineating of a plurality of candidate collimation blades from said collimation boundary transition pixels modeled as step edges with polarity from said collimation boundary transition pixels;
determining a plurality of candidate partition blade pairs from a list of said candidate collimation blades includes using a multiple-pass method; determining at a region level the radiation field from the results of said determining step ; wherein said estimating step includes the steps of:
determining a plurality of candidate partition blade pairs from said candidate collimation blades;
sorting said candidate partition blade pairs in to a list of such an order that said radiographic image can be continuously and recursively partitioned;
partitioning said radiographic image into a simple sub-image and a compound sub-image using the most likely partition blade pair on the said list, and taking said pair off said list thereafter;
repeating said partitioning process for said compound sub-image using the remaining partition blade pairs on said list; and
collecting candidate collimation blades that belong to each valid said simple sub-image;
wherein said step of determining a plurality of candidate partition blade pairs from a list of said candidate collimation blades includes using a multiple-pass method of the following steps:
the first pass is a process of rule-based decision to identify all the possible combinations of candidate collimation blades that can construct a partition blade pair, including, in terms of rules, a blade pair should (i) have an intersection angle less than a predefined value, (ii) have opposite polarities, %(iii) have the dominant part of either blade relative to the other blade on the side opposite to the polarity of the other blade, etc.; if two pairs, e.g., (A, B) and (A, C), share the same blade A, and, B and C are linearly coherent, these two pairs are merged into one;
the second pass is a process of fuzzy score-based evidence accumulation to rank the likelihood of the candidate partition blade pairs including, in terms of fuzzy scores, a partition blade pair (i) should not be too close to the image borders, (ii) should have comparable lengths, (iii) should be present next to each other, (iv) should be nearly parallel, (v) should not be too far apart relative to the dimensions of said radiographic image, (vi) should have large spatial extent relative to the dimensions of said radiographic image, (vii) should be well composed, (viii) should have no significant direct exposure region or modulated region within the gap formed by the candidate partition blade pair in the cases of disconnected and minor overlapping radiation fields, or should have significant direct exposure region within the gap in the cases of major overlapping radiation fields, (ix) should have the dominant part of each blade on the outer side relative to the other blade according to the polarity of the other blade in the cases of disconnected and minor overlapping radiation fields, or should have the dominant part of each blade on the inner side relative to the other blade according to the polarity of the other blade in the case of major overlapping radiation fields; and
the third pass is a process to select best partition blade pairs such that (1) only the best pair, in terms of the largest overall combined figure-of-merit, is selected among those that share a common partition blade, (2) only the better pair, in terms of the largest overall combined figure-of-merit, is selected if two pairs are too close to each other, (3) both pairs are rejected if majority of either of the blades in either pair falls within the gap formed by extending the candidate blades of the other pair to the borders of said radiographic image or said compound image, whichever applies, (4) only the inner pair is retained if majority of both of the blades in either pair falls within the gap formed by extending the candidate blades of the other pair to the borders of said radiographic image or said compound image, whichever applies.

3. The method of claim 1 where said pre-defined image placement rules includes using the values of modality, body part and procedure from said image exam information and providing format and position for each said exposure field sub-image to create said composed digital medical image.

4. The method of claim 3 where said pre-defined image placement rules includes providing a default window center and window width parameter for each said exposure field sub-image.

5. The method of claim 3 where said pre-defined image placement rules includes providing a default magnification parameter for each said exposure field sub-image.

6. The method of claim 5 where said default magnification parameter is one-to-one magnification.

7. The method of claim 5 where said default magnification parameter is scale-to-fit.

8. The method of claim 5 where said default magnification parameter is true-size.

9. The method of claim 1 where one or more of the said digital medical image contain multiple exposure fields.

10. The method of claim 1 where one or more said exposure field sub-images is enhanced by one or more image enhancement algorithms prior to creating said composed digital medical image.

11. The method of claim 10 where said image enhancement processing includes applying a blackened surround mask to the collimated region of each said exposure field sub-image.

12. The method of claim 10 where said image enhancement algorithms include the application of one or more look-up tables.

13. The method of claim 12 where said look-up tables is a window center and window width operation.

14. The method of claim 10 where said image enhancement algorithms include low frequency attenuation spatial processing.

15. The method of claim 14 where said low frequency attenuation spatial processing comprises the steps of:
providing a digital image;
decomposing the image into a multiresolution representation having low frequency images and high frequency images;
performing dynamic range expansion and/or compression on the low frequency images;
modifying the high frequency images with a method incorporating noise estimation, anatomical regions of importance, and edge estimation which are carried out in parallel, such modification being a combination of attenuation and amplification;
combining the processed resolution images to form a resulting image;
shifting the pixel values of the resulting image to map said values into a desired range; and
applying a tonescale to the shifted image for display.

16. The method of claim 8 where said image enhancement algorithms include edge enhancement spatial processing.

17. The method of claim 1 where each said exposure field sub-image may be manually repositioned in the said composed digital medical image.

18. The method of claim 1 where the magnification of each said exposure field sub-image may be adjusted in the said composed digital medical image.

19. A computer storage product for storing a digital program for carrying out the method of claim 1 in a digital computer.
